# FASCICULE DE BREVET EUROPEEN

(11) **EP 3 479 448 B1**
(45) Date de publication et mention de la délivrance du brevet: **15.07.2020**
(21) Numéro de dépôt: 17734067.6
(22) Date de dépôt: 29.06.2017
(51) Int. Cl.: H02H 3/08, H02H 3/05, H01H 89/00, H01H 9/54, H01H 47/00

(54) **DISPOSITIF DE COUPURE A SEMI-CONDUCTEURS**
HALBLEITERABSCHALTVORRICHTUNG
SEMICONDUCTOR CUTOFF DEVICE

(30) Priorité: 30.06.2016 FR 1656181
(43) Date de publication de la demande: 08.05.2019
(73) Titulaire: Mersen France SB SAS, 69720 Saint-Bonnet-de-Mure (FR)
(72) Inventeur: MORATI, Mathieu, 38110 Dolomieu (FR); ANNE, François, 49100 Angers (FR); DE PALMA, Jean-François, 49124 St Barthelemy d'Anjou (FR); CHAILLOUX, Thibaut, 69100 Villeurbanne (FR)
(74) Mandataire: Lavoix
(86) Numéro de dépôt international: PCT/EP2017/066092
(87) Numéro de publication internationale: WO 2018/002198

(56) Documents cités:
- EP-A1- 2 801 994
- EP-A2- 0 974 993
- WO-A1-2011/116832
- CN-Y- 200 983 494
- US-A- 5 650 901
- US-A1- 2012 087 049

## Description

La présente invention concerne un dispositif de coupure de courant à semi-conducteurs.

Comme décrit dans EP-A-0 513 346, un dispositif de coupure à semi-conducteurs comprend deux bornes de connexion électrique, parmi lesquelles une première borne est connectée à un générateur et une seconde borne est connectée à un composant électrique, que l'on appelle la charge. Le dispositif comprend un circuit comportant deux branches connectées en parallèle : une première branche comporte un commutateur à semi-conducteur et une seconde branche comporte un absorbeur d'énergie, tel qu'une varistance. Le dispositif comprend également un moyen de mesure de l'intensité du courant à une borne du dispositif et une unité électronique de commande du commutateur. Dans des conditions de fonctionnement normales, le commutateur est fermé et assure la connexion entre le générateur et la charge. Lorsqu'une surintensité est détectée, le commutateur s'ouvre et l'énergie électrique est dissipée à l'intérieur de l'absorbeur d'énergie.

Par définition, un commutateur à semi-conducteurs est relativement mauvais conducteur, surtout à forte intensité. Un inconvénient de ce type de dispositif est donc que la quantité d'énergie dissipée par le commutateur lorsqu'il est fermé est relativement importante. L'intensité du courant fourni à la charge est donc, en proportion, assez faible. Ainsi, ce dispositif n'est en pratique pas utilisé dans l'industrie.

Une solution évidente à ce problème consiste à remplacer le commutateur à semi-conducteurs par un interrupteur mécanique, comme par exemple un relais électromécanique. Dans ce type d'application, un relais électromagnétique comprend une paire de contacts fixes et une paire de contacts mobiles. Lors de la fermeture, les contacts mobiles « rebondissent » inévitablement contre les contacts mobiles pendant une certaine période transitoire. On parle d'un phénomène de rebonds, lequel est plus ou moins prononcé en fonction du type d'application. Pendant cette période transitoire, le contact n'est pas clairement établi et des arcs électriques peuvent apparaitre entre les contacts mobiles et les contacts fixes de l'interrupteur, notamment lorsque l'intensité du courant est très forte. Ces arcs électriques détériorent les surfaces de contact de l'interrupteur. La température des métaux peut même grimper, sous l'effet de la chaleur dégagée par l'arc électrique, jusqu'au point de fusion, de sorte que les contacts deviennent liés les uns avec les autres, de manière comparable à l'effet obtenu avec un procédé de soudure à l'arc.

C'est à ces inconvénients qu'entend plus particulièrement remédier l'invention en proposant un dispositif de coupure à semi-conducteurs qui est plus robuste et qui offre une meilleure connexion électrique à l'état passant.

A cet effet l'invention concerne dispositif de coupure de courant à semi-conducteurs, comprenant :
- un circuit avec une première branche comportant un organe absorbeur d'énergie et une deuxième branche comportant un commutateur à semi-conducteurs, le commutateur à semi-conducteurs étant connecté en parallèle avec la première branche, le circuit comprenant une troisième branche comportant un interrupteur mécanique, la troisième branche étant connectée en parallèle avec la deuxième branche,
- un moyen de mesure de l'intensité du courant électrique à une borne du dispositif, et
- une unité électronique de commande du commutateur, programmée pour commander l'ouverture du commutateur à semi-conducteurs lorsque l'intensité du courant mesurée par le moyen de mesure atteint une valeur prédéterminée, le dispositif basculant alors d'un état passant à un état de coupure, dans lequel le courant est absorbé par l'organe absorbeur d'énergie, l'ouverture et la fermeture de l'interrupteur mécanique étant commandées par l'unité électronique de commande, l'unité électronique de commande étant programmée de telle sorte que le commutateur à semi-conducteurs est ouvert après l'interrupteur mécanique lorsque le dispositif passe de l'état passant à l'état de coupure.

Conformément à l'invention, l'unité électronique de commande est programmée de telle sorte que le commutateur à semi-conducteurs est fermé avant l'interrupteur mécanique lorsque le dispositif passe de l'état de coupure à l'état passant.

Grâce à l'invention, le courant électrique passe par le commutateur à semi-conducteurs tant que le contact électrique de l'interrupteur mécanique n'est pas clairement établi, et donc notamment pendant la période transitoire à rebonds. La tension aux bornes de l'interrupteur mécanique est donc très faible, voire nulle, pendant la période transitoire à rebonds. Il n'y a donc pas de risque d'apparition d'un arc électrique entre les contacts de l'interrupteur mécanique.

Par ailleurs, lorsqu'il y a besoin d'une coupure de courant, le commutateur à semi-conducteurs reste fermé pendant une certaine période après la fin de la séquence d'ouverture de l'interrupteur mécanique. Cela permet d'obtenir une déionisation de l'air entre les contacts fixes et les contacts mobiles de l'interrupteur mécanique. Ce séquencement à l'ouverture est connu de EP 2 801 994 A1 et US 5 650 901 notamment.

Effectivement, EP 2 801 994 A1 divulgue un dispositif de coupure de courant à semi-conducteurs dans lequel le commutateur est ouvert après l'interrupteur mécanique, de façon à éviter la formation d'un arc électrique entre les contacts fixes et mobiles de l'interrupteur mécanique.

De son côté, US 5 650 901 divulgue un circuit de coupure pour un système de distribution triphasé. Le circuit comprend, pour chaque phase, un dispositif de coupure selon le préambule de la revendication 1. Lors de l'apparition d'un défaut dans le système de distribution, notamment au niveau d'une phase, l'interrupteur mécanique du dispositif de coupure correspondant est ouvert et le commutateur à semi-conducteur reste fermé, du moins pendant une certaine période de temps.

En revanche, aucun de ces deux documents ne traite le problème de la séquence à la fermeture, et notamment la gestion de la période transitoire à rebonds durant laquelle le contact électrique au sein de l'interrupteur mécanique n'est pas totalement établi. Il est donc probable qu'un arc électrique, susceptible de dégrader l'interrupteur mécanique, se forme à chaque séquence de fermeture du dispositif. Ces dispositifs connus sont donc clairement moins robustes dans le temps, car plus sensibles à la répétition des séquences d'ouverture et de fermeture.

Selon des aspects avantageux, mais non obligatoires de l'invention, le dispositif de coupure peut incorporer une ou plusieurs des caractéristiques suivantes, prises dans toute combinaison admissible :
- L'interrupteur mécanique comprend une partie fixe, une partie mobile entre une position ouverte et une position fermée et un moyen de mesure de la position de la partie mobile par rapport à la partie fixe, ce moyen de mesure étant connecté à l'unité électronique de commande, alors que l'unité électronique de commande est programmée pour fermer le commutateur à semi-conducteurs lorsque la partie mobile, en déplacement vers la position fermée, atteint une première position seuil. Ainsi, le commutateur à semi-conducteurs est fermé le plus tard possible avant le début de la période transitoire, de manière à éviter que le commutateur ne supporte trop longtemps le passage du courant et ne se dégrade donc trop rapidement. Le temps de fermeture d'un commutateur à semi-conducteurs est très court comparé au temps de fermeture d'un interrupteur mécanique. A titre d'exemple, le temps de fermeture d'un commutateur à semi-conducteurs est de l'ordre de 1 µs (microsecondes), alors que le temps de fermeture d'un interrupteur mécanique « classique » est compris entre 5 et 25 ms (millisecondes). En pratique, le commutateur à semi-conducteurs est fermé avant que les contacts mobiles ne s'approchent trop près des contacts fixes, c'est-à-dire avant que le risque d'apparition d'un arc électrique ne soit trop important. Le commutateur à semi-conducteurs est donc fermé lorsque la distance entre les contacts est inférieure à une valeur seuil. La distance est calculée en dynamique par l'unité électronique de commande grâce à la mesure de position fournie par le moyen de mesure.
- La première position seuil est définie de telle sorte qu'une première période entre la fermeture du commutateur et la fermeture de l'interrupteur mécanique est comprise entre 100 µs et 1 ms.
- L'unité électronique de commande est programmée pour ouvrir le commutateur à semi-conducteurs après une seconde période à compter de l'instant où la partie mobile en déplacement vers la position ouverte atteint une seconde position seuil, cette seconde position seuil étant définie de telle sorte que la seconde période est inférieure à 1 ms, notamment comprise entre 10 µs et 100 µs. Cela permet avantageusement d'éviter le passage de courant à travers l'interrupteur mécanique le temps que le volume d'air entre les contacts fixes et les contacts mobiles soit déionisé. On évite ainsi de « réarquer » l'interrupteur, c'est-à-dire de créer des arcs électriques entre les contacts mobiles et fixes.
- L'organe absorbeur d'énergie est amovible. Cela permet de remplacer l'organe absorbeur d'énergie lorsque son fonctionnement se dégrade, par exemple après un certain nombre d'utilisations et d'éviter ainsi de remplacer la totalité du dispositif de coupure.
- L'interrupteur mécanique comprend une partie mobile munie d'un disque de répulsion et une bobine de répulsion qui, lorsqu'elle est alimentée en courant, repousse le disque de répulsion, la partie mobile se déplaçant alors de sa position fermée à sa position ouverte. Cela permet d'obtenir une ouverture rapide de l'interrupteur mécanique. A titre d'exemple, le temps d'ouverture d'un tel interrupteur est de l'ordre de 200 µs, alors que le temps d'ouverture d'un interrupteur mécanique « classique » est compris entre 5 et 25 ms. Ainsi, lorsqu'une surintensité est détectée, le dispositif est ouvert le plus rapidement possible pour faire en sorte que la charge soit le moins longtemps possible en conduction sous l'effet d'un courant de défaut.
- L'interrupteur mécanique a un temps d'ouverture inférieur à 1 ms, notamment de l'ordre de 200 µs.
- Le circuit comprend une quatrième branche ayant un nœud commun avec la troisième branche et un nœud commun avec les deux premières branches, cette quatrième branche comprenant un autre interrupteur mécanique.
- Le circuit comprend une quatrième branche reliant une borne de connexion électrique du dispositif aux trois premières branches du circuit, cette quatrième branche comprenant un autre interrupteur mécanique.
- L'autre interrupteur mécanique est dimensionné pour assurer une isolation galvanique entre une première borne de connexion et une seconde borne de connexion du dispositif.
- Le dispositif comprend deux bornes de connexion électrique dont l'une d'entre elles est destinée à être connectée à une source de courant continu.

L'invention et d'autres avantages de celle-ci apparaitront plus clairement à la lumière de la description qui va suivre de deux modes de réalisation d'un dispositif de coupure de courant à semi-conducteurs conformes à leur principe, donnée uniquement à titre d'exemple et faite en référence aux dessins annexés dans lesquels :
- la figure 1 est un schéma électrique d'un dispositif de coupure selon un premier mode de réalisation de l'invention ;
- la figure 2 est une coupe représentant un interrupteur mécanique appartenant au dispositif de coupure de la figure 1, cet interrupteur mécanique étant représenté en position ouverte ;
- la figure 3 est une coupe comparable à la figure 2, dans laquelle l'interrupteur mécanique est représenté en position fermée ;
- la figure 4 comprend trois graphiques représentatifs de l'évolution, en fonction du temps, d'un signal S16 de commande de l'interrupteur mécanique des figures 2 et 3, de la position P16 d'une partie mobile de l'interrupteur mécanique des figures 2 et 3 par rapport à une partie fixe et d'un signal S10 de commande d'un commutateur à semi-conducteurs appartenant au dispositif de coupure de la figure 1, lors d'une séquence de fermeture du dispositif de coupure ;
- la figure 5 comprend quatre graphiques représentatifs de l'évolution, en fonction du temps, du signal S16 de commande de l'interrupteur mécanique des figures 2 et 3, de l'intensité I12 traversant un autre interrupteur mécanique appartenant au dispositif de coupure de la figure 1, de l'intensité I10 traversant un commutateur à semi-conducteurs du dispositif et de l'intensité I16 du courant traversant l'interrupteur mécanique des figures 2 et 3, lors de la séquence de fermeture du dispositif,
- la figure 6 comprend trois graphiques représentant les mêmes grandeurs qu'à la figure 4, mais lors d'une séquence d'ouverture du dispositif de coupure de la figure 1,
- la figure 7 comprend cinq graphiques représentant, en fonction du temps, les mêmes grandeurs qu'à la figure 5, mais pour une séquence d'ouverture du dispositif de coupure, avec en plus un graphique représentant l'intensité I6 traversant un organe absorbeur d'énergie du dispositif de coupure de la figure 1 ;
- la figure 8 est une vue en perspective de l'absorbeur d'énergie, représenté en configuration détachée du dispositif de coupure,
- la figure 9 est un schéma comparable à la figure 1, représentant un dispositif de coupure de courant à semi-conducteurs selon un second mode de réalisation de l'invention.

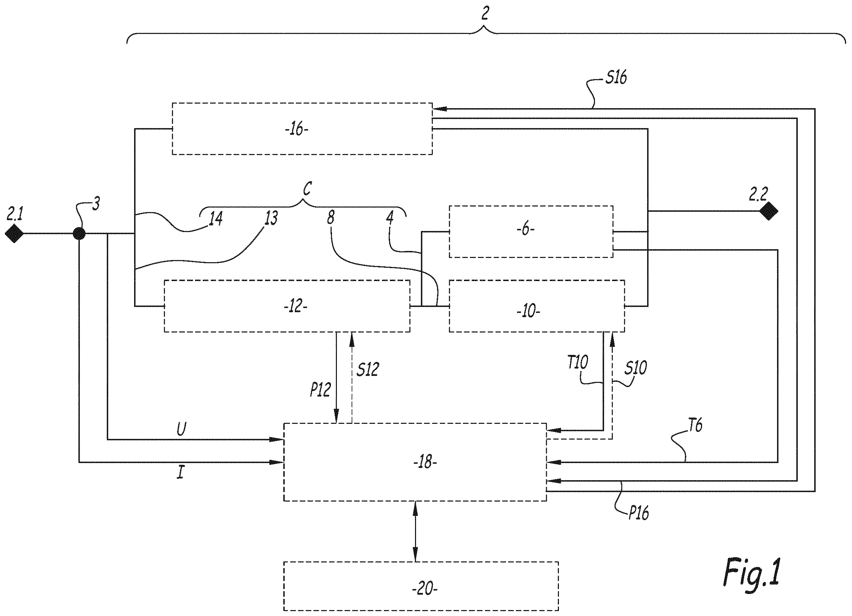

Sur la figure 1 est représenté un dispositif de coupure de courant à semi-conducteurs 2. Le dispositif 2 est un appareil de protection électrique destiné à être inséré dans un circuit électrique à protéger. Le dispositif 2 comprend deux bornes de connexion électrique, respectivement 2.1 et 2.2. La borne 2.1 peut être reliée à une source de courant, alors que la borne 2.2 peut être reliée à une charge électrique, ou inversement. On comprend donc que le dispositif de coupure 2 est bidirectionnel.

Typiquement, la source de courant est une source de courant continu, c'est à dire une source dont la tension est indépendante du temps.

Le dispositif de coupure 2 comprend un circuit électrique C avec une première branche 4 comportant un organe absorbeur d'énergie 6. Cet organe absorbeur d'énergie 6 comprend un ou plusieurs des éléments suivants, lesquels peuvent être associés en série et/ou en parallèle :
- une ou plusieurs varistances associées en série et/ou en parallèle,
- une ou plusieurs diodes Zener/Transil associées en série et/ou en parallèle,
- un ou plusieurs tubes à gaz associés en série et/ou en parallèle,
- une ou plusieurs résistances associées en série et/ou en parallèle, et
- un ou plusieurs condensateurs associés en série et/ou en parallèle.

Le circuit C comprend également une deuxième branche 8 comportant un commutateur à semi-conducteurs 10 connecté en parallèle avec la première branche 4 du circuit C. Le commutateur 10 comprend un ou plusieurs des composants électroniques suivant, lesquels peuvent être associés en série et/ou en parallèle :
- un ou plusieurs thyristors, notamment du type à extinction par la gâchette (GTO),
- une ou plusieurs diodes, et
- un ou plusieurs transistors, notamment du type à effet de champ à grille isolée (MOSFET).

Le circuit C comprend une troisième branche 14 comportant un interrupteur mécanique 16. Cette troisième branche 14 est connectée en parallèle avec la deuxième branche 8 et avec la première branche 4.

Avantageusement, le circuit C comprend une quatrième branche 13 ayant un nœud commun avec la troisième branche 14 et un nœud commun avec les branches 4 et 8. Cette quatrième branche 13 relie la borne 2.1 du dispositif 2 aux branches 4 et 8 du circuit C. Elle comprend un autre interrupteur mécanique 12 connecté en série avec le commutateur à semi-conducteurs 10 et avec l'organe absorbeur d'énergie 6.

L'interrupteur mécanique 12 est dimensionné pour assurer une isolation galvanique entre les bornes de connexion 2.1 et 2.2 du dispositif 2. En effet, l'interrupteur mécanique 12 impose une distance physique entre les bornes de connexion 2.1 et 2.2 qui est supérieure à 1,5 mm, de préférence de l'ordre de 3 mm. L'interrupteur 12 est optionnel pour la réalisation de l'invention.

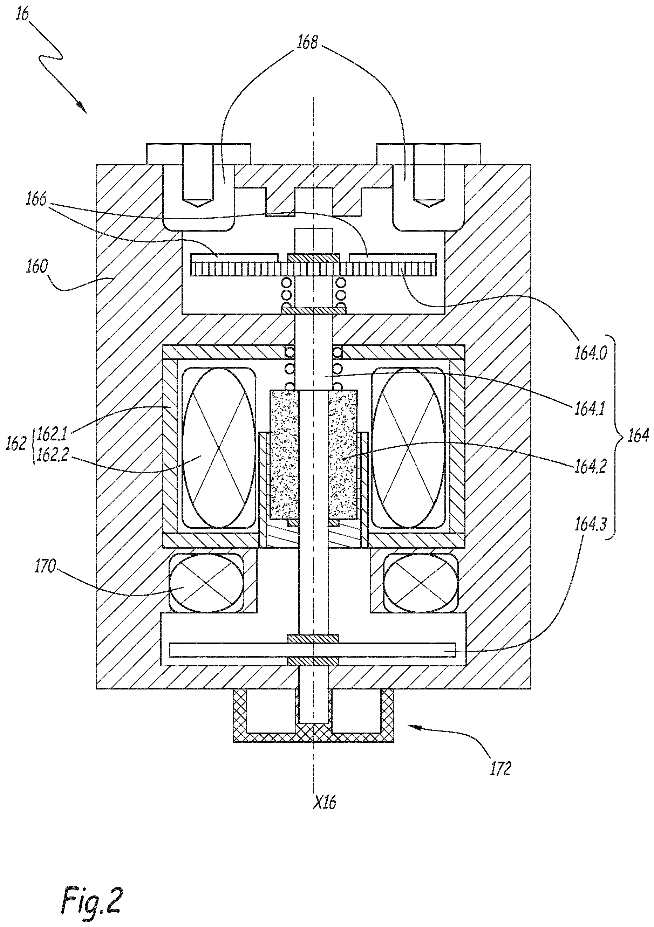

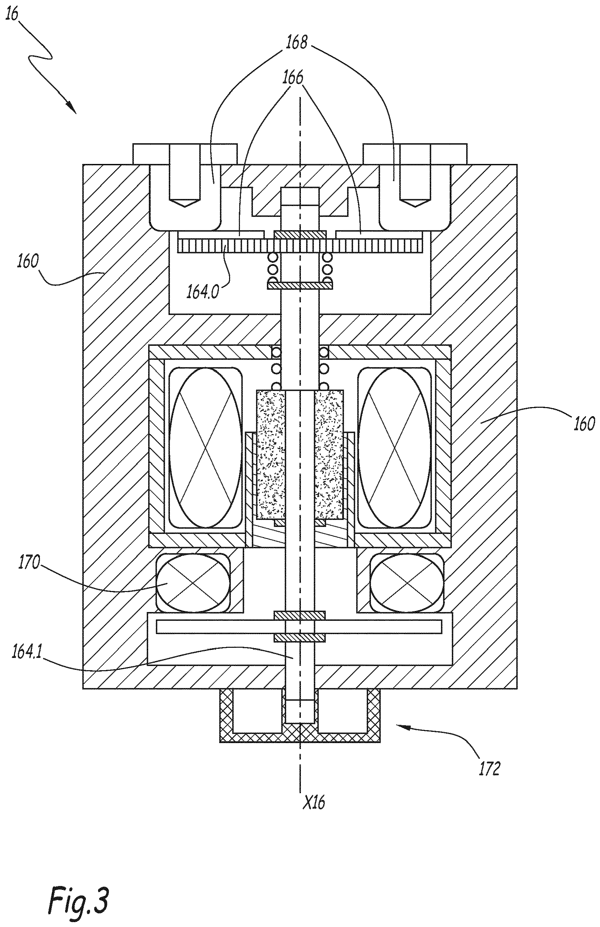

La structure de l'interrupteur mécanique 16 est visible aux figures 2 et 3.

Comme visible sur ces figures, l'interrupteur mécanique 16 comprend un bâti 160, une paire de contacts fixes 168 et une paire de contacts mobiles 166. Les contacts mobiles 166 sont montés sur un porte-contacts 164.0 en matériau électriquement isolant.

L'interrupteur mécanique 16 comprend un actionneur électromagnétique logé à l'intérieur du bâti 160. L'actionneur comprend une partie fixe 162 incluant une cage 162.1, à l'intérieur de laquelle est disposée une bobine 162.2 apte à générer un champ magnétique et une partie 164, mobile selon un axe X16, entre une position ouverte représentée à la figure 2 et une position fermée représentée à la figure 3. Cette partie mobile 164 comprend le porte-contacts 164.0, un arbre central 164.1, un noyau magnétique 164.2 fixé autour d'une partie centrale de l'arbre 164.1 et un disque de répulsion 164.3. Le porte-contacts 164.0 et le disque de répulsion 164.3 sont fixés à des extrémités opposées de l'arbre 164.1.

Le bâti 160 loge également une bobine de répulsion 170 qui, lorsqu'elle est alimentée en courant continu, repousse le disque de répulsion 164.3, ce qui a pour effet de déplacer la partie mobile 164 de l'actionneur de la position fermée à la position ouverte.

Lorsque l'interrupteur mécanique 16 reçoit un signal de commande de fermeture, la bobine 162.2 est alimentée en courant continu et génère un champ magnétique orienté pour déplacer le noyau magnétique 164.2 de la partie mobile 164. La partie mobile 164 se déplace alors de la position de la figure 2 à la position de la figure 3, dans laquelle les contacts mobiles 166 touchent les contacts fixes 168. Les contacts électriques de l'interrupteur 16 sont donc normalement ouverts en l'absence d'alimentation électrique de la bobine 162.2. On parle de topologie de contacts NO.

L'interrupteur mécanique 16 comprend un moyen 172 de mesure de la position P16 de la partie mobile 164 par rapport à la partie fixe 162. Dans l'exemple, le moyen de mesure 172 est un capteur photoélectrique.

Lorsque l'interrupteur mécanique 16 reçoit un signal de commande d'ouverture, la bobine de répulsion 170 est alimentée en courant et génère un champ magnétique orienté pour repousser le disque de répulsion 164.3 selon une direction opposée aux contacts fixes 168 de l'interrupteur 16. L'utilisation de la répulsion magnétique pour l'ouverture de l'interrupteur 16 procure un temps d'ouverture extrêmement rapide en comparaison avec un actionneur électromécanique « classique » dans lequel le rappel de la partie mobile en position ouverte est effectué par un élément mécanique, tel qu'un ressort. En pratique, le temps d'ouverture, mesuré à partir du moment où l'ordre d'ouverture est envoyé et le moment où le contact électrique est réellement ouvert, est très inférieur à 1 ms.

Le dispositif de coupure 2 comprend également une unité électronique de commande 18 qui est connectée avec chacun des composants du circuit électronique C. Ainsi, l'unité électronique de commande 18 est apte à envoyer des signaux de commande pour l'ouverture et la fermeture des interrupteurs 12 et 16, ainsi que pour l'ouverture et la fermeture du commutateur 10. Ces signaux de commande sont respectivement référencés S12, S16 et S10 sur la figure 1. Dans l'exemple, les signaux S12, S16 et S10 prennent la valeur « 1 » lorsque l'interrupteur ou le commutateur correspondant est fermé et la valeur « 0 » lorsque l'interrupteur ou le commutateur correspondant est ouvert.

L'unité électronique de commande 18 est connectée à l'interrupteur mécanique 16 et notamment au moyen de mesure 172, pour collecter, en dynamique, la position P16 de la partie mobile 164 de l'actionneur par rapport à la partie fixe 162.

L'unité électronique de commande 18 est également connectée à l'organe d'absorbeur d'énergie 6 et au commutateur à semi-conducteurs 10 pour récupérer, en dynamique, la température T6 de l'organe 6 et la température T10 du commutateur à semi-conducteurs 10. Cela permet de surveiller l'état de fonctionnement de l'organe absorbeur d'énergie 6 et du commutateur à semi-conducteurs 10, en détectant une éventuelle surchauffe.

Par ailleurs, l'unité électronique de commande 18 est connectée à l'autre interrupteur mécanique 12 pour collecter l'état P12 de l'interrupteur 12. L'état P12 de l'interrupteur 12 est par exemple transmis sous la forme d'un signal binaire, qui vaut « 0 » lorsque l'interrupteur 12 est ouvert et « 1 » lorsque l'interrupteur 12 est fermé.

Le dispositif 2 comprend un moyen 3 pour mesurer l'intensité I en entrée du dispositif 2, c'est-à-dire au niveau de la borne de connexion 2.1. Le moyen de mesure 3 est un ampèremètre qui transmet en continu à l'unité électronique de commande 18 un signal électrique représentatif de l'intensité I mesurée. A titre de variante, l'intensité peut être mesurée au niveau de la borne 2.2. Avantageusement, le dispositif 2 comprend en outre un voltmètre pour mesurer la tension, c'est-à-dire le potentiel électrique, en entrée du dispositif 2.

Le dispositif de coupure 2 peut prendre deux états : un état passant, dans lequel le courant circule entre les deux bornes de connexion électrique 2.1 et 2.2 et un état de coupure, dans lequel le courant électrique est absorbé par l'organe absorbeur d'énergie 6 et dans lequel aucun courant ne circule entre les bornes de connexion électrique 2.1 et 2.2. Lorsque l'intensité I du courant mesurée par le moyen de mesure 3 atteint une valeur prédéterminée, le dispositif bascule de l'état passant à l'état de coupure.

Avantageusement, le dispositif 2 comprend une interface utilisateur 20 permettant de communiquer l'état du dispositif 2 à une personne extérieure, telle qu'un opérateur. L'interface utilisateur 20 peut comprendre tout type de moyens de communication visuelle, tel que des diodes électroluminescentes (LED) ou un écran. L'écran peut être tactile. L'interface utilisateur 20 peut également comprendre des moyens de communication tactiles, tels que des boutons de commande.

Dans le présent document et sauf contre-indication, les termes « ouvert » et « fermé » utilisés en relation avec les interrupteurs mécaniques 12 et 16 ou en relation avec le commutateur à semi-conducteurs 10 correspondent à l'état de l'interrupteur ou du commutateur concerné, et non pas à l'action d'ouverture ou de fermeture.

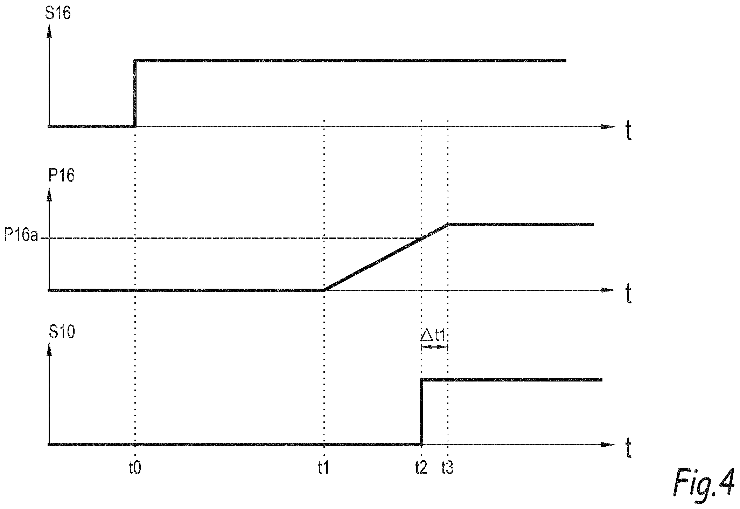

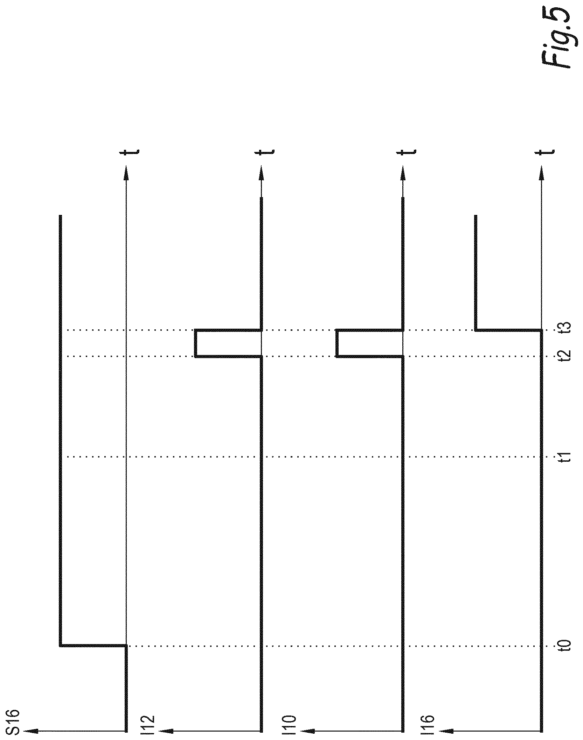

La séquence de fermeture du dispositif de coupure 2 est détaillée ci-dessous en référence aux figures 4 et 5.

A un instant t0, le signal de commande S16 de l'interrupteur mécanique 16 prend la valeur « 1 », ce qui signifie que la fermeture de l'interrupteur mécanique 16 est demandée. A un instant ultérieur t1, la partie mobile 164 de l'actionneur électromagnétique de l'interrupteur 16 commence à se déplacer selon l'axe X16. L'écart de temps entre les instants t0 et t1 correspond au temps de réaction de l'interrupteur 16.

A un instant ultérieur t2, la partie mobile 164, alors en déplacement vers la position fermée, atteint une position seuil P16a. A cet instant t2, un signal de commande S10 du commutateur à semi-conducteurs 10 passe à l'état « 1 », ce qui signifie que la fermeture du commutateur à semi-conducteurs 10 est demandée. Le temps de fermeture du commutateur à semi-conducteurs 10 est extrêmement rapide par rapport à celui de l'interrupteur mécanique 16. Ainsi, on considère, dans le présent exemple, que le commutateur à semi-conducteurs 10 est fermé à l'instant t2.

A un instant ultérieur t3, l'interrupteur mécanique 16 est complètement fermé, c'est-à-dire que les contacts mobiles 166 sont en appui contre les contacts fixes 168.

L'unité électronique de commande 18 est donc programmée de telle sorte que le commutateur à semi-conducteurs 10 est fermé avant l'interrupteur mécanique 16 lorsque le dispositif 2 passe de l'état de coupure à l'état passant. Cela signifie que le commutateur à semi-conducteurs 10 passe à l'état fermé avant l'interrupteur mécanique 16.

La position seuil P16a est définie de telle sorte que la période Δt1 s'écoulant entre la fermeture du commutateur à semi-conducteurs 10 et la fermeture de l'interrupteur mécanique 16, c'est-à-dire la période s'écoulant entre les instants t2 et t3, est comprise entre 100 µs et 1 ms.

Comme visible à la figure 5, jusqu'à l'instant t2, aucun courant ne circule à travers le dispositif de coupure 2. La période Δt1 correspond, ou du moins inclut, la période transitoire de fermeture de l'interrupteur mécanique 16. Cette période transitoire est marquée par un phénomène caractéristique de rebonds, suivant lequel les contacts mobiles 166 rebondissent contre les contacts fixes 168.

L'application d'une tension élevée aux bornes de l'interrupteur pendant cette période transitoire peut nuire au fonctionnement de l'interrupteur car des arcs électriques peuvent se produire entre les paires de contacts. Ces arcs électriques sont susceptibles de dégrader les surfaces de contacts, voire de créer des points de soudure entre les contacts fixes et les contacts mobiles. Or, entre les instants t2 et t3, le courant à l'entrée du dispositif de coupure 2 passe en intégralité à travers l'interrupteur mécanique 12 et le commutateur à semi-conducteur 10. En effet, la résistance du volume d'air entre les contacts fixes 168 et les contacts mobiles 166.1 est supérieure à la résistance du commutateur 10 : le courant préfère donc passer par la branche 8 du circuit C, plutôt que par la branche 14. Ainsi, il n'y a pas ou peu de tension appliqué aux bornes de l'interrupteur mécanique 16 entre les instants t2 et t3. La période transitoire « à rebonds » peut donc d'effectuer sans risques de formation d'un arc électrique.

A l'instant t3, l'interrupteur mécanique 16 est complétement fermé. La quasi-totalité du courant en entrée du dispositif de coupure 2 traverse alors l'interrupteur mécanique 16, lequel a pour avantage de présenter une résistance quasi-nulle au passage du courant électrique. On constate alors que le commutateur à semi-conducteurs 10 ne conduit le courant que pendant une période transitoire correspondant à la différence entre les instants t3 et t2. Le commutateur à semi-conducteurs 10 ne fonctionne donc pas de manière prolongée, comme enseigné dans EP-A-0 513 346, si bien que l'énergie thermique dissipée à travers celui-ci est relativement faible.

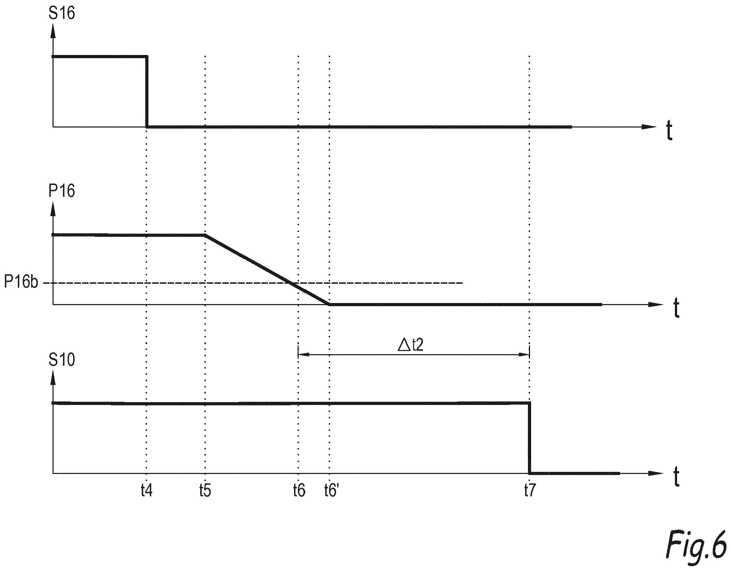

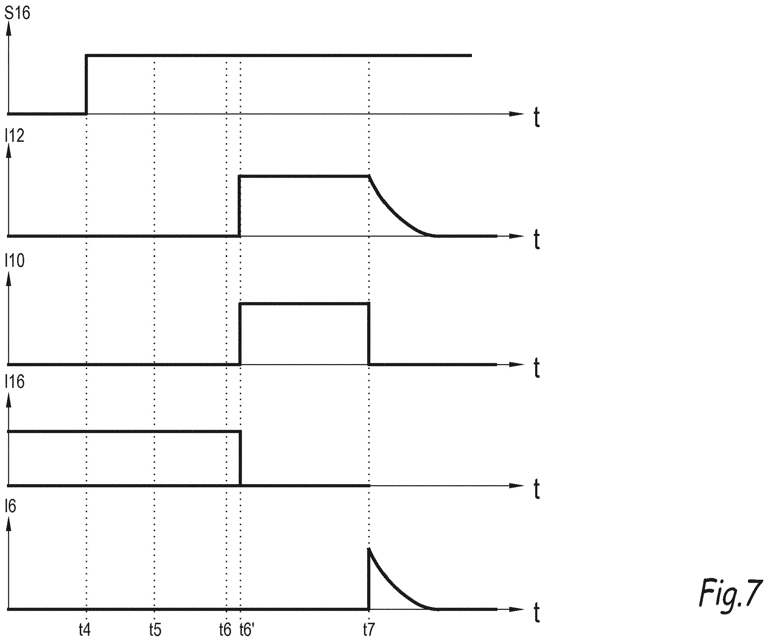

La séquence d'ouverture du dispositif de coupure 2 est décrite ci-dessous en relation avec les figures 6 et 7. L'ouverture du dispositif de coupure 2 est commandée de manière automatique par l'unité électronique de commande 18 lorsque l'intensité I à la borne de connexion électrique 2.1 atteint un seuil dangereux pour le circuit électrique à l'intérieur duquel le dispositif de coupure 2 est implanté. Par exemple, l'unité électronique de commande 18 peut être programmée pour comparer, en dynamique, l'intensité I avec une valeur seuil prédéfinie.

Supposons dans l'exemple qu'à un instant t4, l'intensité I dépasse la valeur seuil. L'unité électronique de commande 18 commande alors l'ouverture du dispositif 2. Le signal de commande S16 de l'interrupteur 16 passe de l'état « 1 » à l'état « 0 », ce qui signifie que l'ouverture de l'interrupteur mécanique 16 est demandée.

A un instant ultérieur t5, la partie mobile 164 de l'actionneur électromagnétique de l'interrupteur 16 commence à se déplacer de sa position fermée vers sa position ouverte.

A un instant ultérieur t6, la partie mobile 164 en déplacement vers la position ouverte atteint une seconde position seuil P16b.

A un instant ultérieur t6', l'interrupteur mécanique 16 est complétement ouvert. Le courant passe alors en intégralité à travers l'interrupteur mécanique 12 et le commutateur à semi-conducteurs 10, lesquels demeurent passants lorsque le dispositif de coupure 2 est à l'état passant, même si aucun courant ne circule à travers ces derniers. En effet, le commutateur 10 présente une résistance électrique relativement élevée par rapport à l'interrupteur 16.

A un instant ultérieur t7, le commutateur à semi-conducteurs 10 est ouvert. L'intégralité du courant passe alors dans la première branche 4 comportant l'absorbeur d'énergie 6. Comme visible au schéma du bas de la figure 7, le courant est alors dissipé à l'intérieur de l'absorbeur d'énergie 6 sous forme d'énergie thermique. Dans l'exemple où l'organe d'absorbeur d'énergie 6 est une varistance, la résistance de l'organe 6 est d'autant plus importante que l'intensité du courant est forte. On obtient alors une tension très élevée aux bornes de l'organe absorbeur d'énergie 6, ce qui a pour effet d'abaisser et, à terme, d'annuler le courant circulant dans la branche 4 et, a fortiori, le courant circulant entre les bornes 2.1 et 2.2.

L'unité électronique de commande 18 est donc programmée pour ouvrir le commutateur à semi-conducteurs 10 après l'interrupteur mécanique 16. Cela signifie que le commutateur à semi-conducteurs 10 passe à l'état ouvert après l'interrupteur mécanique 16.

Plus précisément, l'unité électronique de commande 18 est programmée pour ouvrir le commutateur à semi-conducteurs 10 après une seconde période Δt2 à compter de l'instant t6 où la partie mobile 164 en déplacement vers la position ouverte atteint la seconde position seuil P16b, cette seconde position seuil P16b étant définie de telle sorte que la seconde période Δt2, définie comme la différence de temps entre les instants t6 et t7, est inférieure à 1 ms, notamment comprise entre 10 µs et 100 µs. Cela permet de guider le courant vers la branche 8 le temps que le volume d'air entre les contacts fixes 168 et les contacts mobiles 166.1 soit déionisé. On évite ainsi de « réarquer » l'interrupteur 16, c'est-à-dire de créer des arcs électriques entre les contacts mobiles et fixes.

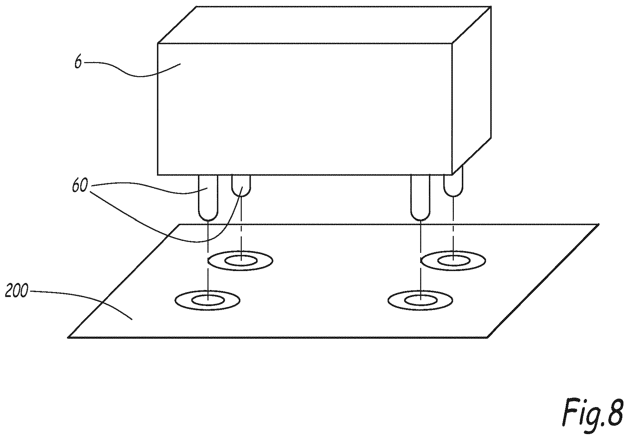

Comme visible à la figure 8, l'organe absorbeur d'énergie 6 est de préférence amovible. Il est représenté sur cette figure par un boîtier muni de quatre fiches électriques 60 destinées à être connectées avec des prises électrique correspondantes 202 d'un support 200 appartenant au dispositif de coupure 2. Lorsqu'il est usé, l"organe absorbeur d'énergie 6 peut être remplacé par un organe neuf. L'usure de l'organe absorbeur d'énergie 6 peut être évaluée tout au long de l'utilisation du dispositif 2 grâce à la mesure de température T6. En effet, une élévation brutale de la température de l'absorbeur d'énergie 6 correspond à un passage du dispositif à l'état de coupure. L'unité 18 est alors capable de comptabiliser et d'enregistrer en mémoire le nombre de coupures de courant effectuées par le dispositif 2. En outre, l'unité électronique de commande 18 est apte à calculer l'énergie dissipée par l'absorbeur d'énergie 6 à chaque coupure, par l'intermédiaire de la mesure de courant I, et apte à détecter une surchauffe anormale de l'absorbeur 6. Sur cette base, un signal d'alarme peut être émis lorsqu'il convient de remplacer l'organe absorbeur d'énergie 6 par un composant neuf.

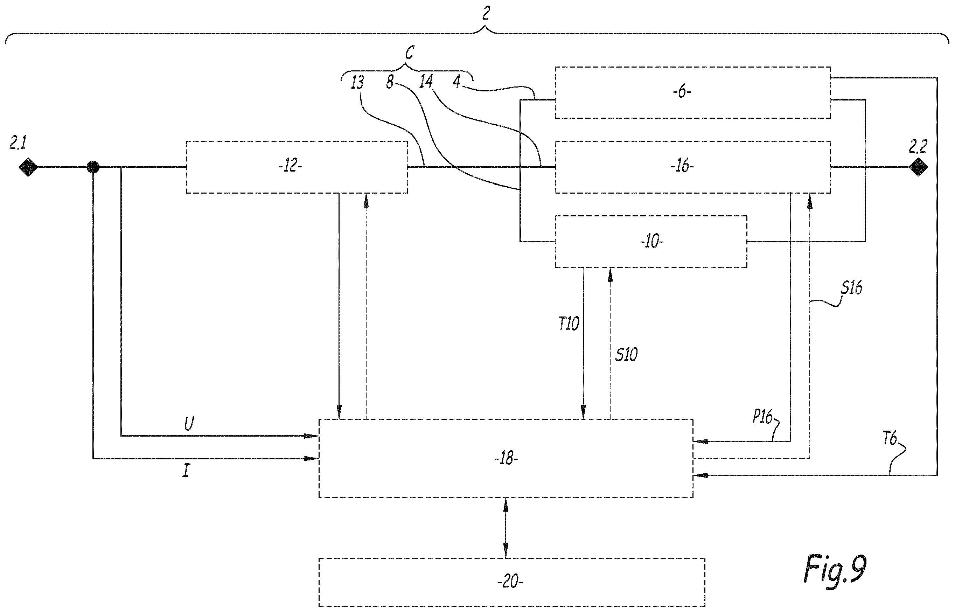

Sur la figure 9 est représenté un dispositif de coupure selon un deuxième mode de réalisation de l'invention. Dans ce qui suit, seules les différences par rapport au premier mode de réalisation sont décrites par soucis de concisions. Les composants électroniques du dispositif de coupure selon le second mode de réalisation sont identiques à ceux utilisés dans le dispositif de coupure selon le premier mode. Ainsi, les mêmes références numériques sont utilisées pour les deux modes de réalisation.

Le dispositif de coupure 2 selon ce deuxième mode de réalisation se distingue de celui décrit précédemment par le fait que la branche 13 comprenant l'interrupteur mécanique 12 relie la borne 2.1 aux branches 4, 8 et 14 du circuit C. La branche 13 a donc un nœud commun avec chacune des branches 4, 8 et 14.

Bien que le câblage soit différent, le dispositif de coupure 2 selon ce deuxième mode de réalisation fonctionne de manière comparable au dispositif de coupure 2 de la figure 1.

Sans avoir égard à ce qui précède, le caractère amovible de l'organe absorbeur d'énergie 6 pourrait être porté au premier plan par rapport à la commande du commutateur à semi-conducteurs 10 et de l'interrupteur mécanique 12 lors de l'ouverture et de la fermeture du dispositif 2.

Effectivement, dans l'art antérieur, lorsque l'organe d'absorbeur d'énergie, c'est-à-dire le plus souvent la varistance, était usée, on changeait le dispositif de coupure complet, car ledit organe absorbeur d'énergie n'était pas prévu pour être remplacé. Cela revenait évidemment très cher. L'idée est donc ici de proposer un dispositif 2 de coupure de courant à semi-conducteurs pouvant être entretenu plus facilement, et donc avec une durée de vie accrue. Deux modes de réalisation d'un tel dispositif 2 de coupure de courant à semi-conducteurs sont représentés sur les figures 1 à 9.

Ce dispositif 2 de coupure de courant à semi-conducteurs, comprend toujours :
- un circuit C avec une première branche 4 comportant un organe absorbeur d'énergie 6 et une deuxième branche 8 comportant un commutateur à semi-conducteurs 10, le commutateur à semi-conducteurs 10 étant connecté en parallèle avec la première branche 4,
- un moyen 3 de mesure de l'intensité du courant électrique à une borne 2.1 ou 2.2 du dispositif, et
- une unité électronique 18 de commande du commutateur 10, programmée pour commander l'ouverture du commutateur à semi-conducteurs 10 lorsque l'intensité I du courant mesurée par le moyen de mesure 3 atteint une valeur prédéterminée, le dispositif basculant alors d'un état passant à un état de coupure, dans lequel le courant est absorbé par l'organe absorbeur d'énergie.

Dans ce mode de réalisation, le dispositif de coupure 2 est caractérisé par le fait que l'organe absorbeur d'énergie 6 est amovible.

Avantageusement, l'organe absorbeur d'énergie 6 comprend un boîtier muni de quatre fiches électriques 60 destinées à être connectées avec des prises électrique correspondantes 202 d'un support 200 appartenant au dispositif de coupure 2.

De manière astucieuse, l'organe absorbeur d'énergie 6 comprend des moyens de branchement formant un système de détrompage mécanique, lequel empêche de brancher n'importe quel organe absorbeur d'énergie au circuit C. Les systèmes de branchement à détrompage mécanique sont connus en soi, c'est pourquoi le système de détrompage mécanique mis en œuvre pour le branchement de l'organe absorbeur d'énergie 6 n'est pas décrit plus avant.

De préférence, l'unité électronique de commande 18 est apte à collecter, en dynamique (c'est-à-dire en temps réel), la température T6 de l'organe 6 et éventuellement la température T10 du commutateur à semi-conducteurs 10. Cela permet de surveiller l'état de fonctionnement de l'organe absorbeur d'énergie 6 et potentiellement aussi celle du commutateur à semi-conducteurs 10, en détectant une éventuelle surchauffe.

Lorsqu'il est usé, l'organe absorbeur d'énergie 6 peut être remplacé par un organe neuf. L'usure de l'organe absorbeur d'énergie 6 peut être évaluée tout au long de l'utilisation du dispositif 2 grâce à la mesure de la température T6. En effet, une élévation brutale de la température de l'absorbeur d'énergie 6 correspond à un passage du dispositif à l'état de coupure. L'unité 18 est alors capable de comptabiliser et d'enregistrer en mémoire le nombre de coupures de courant effectuées par le dispositif 2. En outre, l'unité électronique de commande 18 est apte à calculer l'énergie dissipée par l'absorbeur d'énergie 6 à chaque coupure, par l'intermédiaire de la mesure de courant I, et apte à détecter une surchauffe anormale de l'absorbeur 6. Sur cette base, un signal d'alarme peut être émis lorsqu'il convient de remplacer l'organe absorbeur d'énergie 6 par un composant neuf.

Egalement, selon des aspects avantageux, mais non obligatoires, ce dispositif peut comprendre une ou plusieurs des caractéristiques suivantes, prises dans toute combinaison techniquement admissible :
- Le circuit C comprend une troisième branche 14 comportant un interrupteur mécanique 16, la troisième branche 14 étant connectée en parallèle avec la deuxième branche 8 ;
- L'ouverture et la fermeture de l'interrupteur mécanique 16 sont commandées par l'unité électronique de commande 18 ;
- L'unité électronique de commande 18 est programmée de telle sorte que le commutateur à semi-conducteurs 10 est fermé avant l'interrupteur mécanique 16 lorsque le dispositif 2 passe de l'état de coupure à l'état passant,
- L'unité électronique de commande 18 est programmée de telle sorte que le commutateur à semi-conducteurs 10 est ouvert après l'interrupteur mécanique 16 lorsque le dispositif 2 passe de l'état passant à l'état de coupure.
- L'interrupteur mécanique 16 comprend une partie fixe 162, une partie 164 mobile entre une position ouverte et une position fermée et un moyen 172 de mesure de la position P16 de la partie mobile 164 par rapport à la partie fixe 162, ce moyen de mesure 172 étant connecté à l'unité électronique de commande 18, alors que l'unité électronique de commande 18 est programmée pour fermer le commutateur à semi-conducteurs 10 lorsque la partie mobile 164, en déplacement vers la position fermée, atteint une première position seuil P16a.
- La première position seuil P16a est définie de telle sorte qu'une première période Δt1 entre la fermeture du commutateur 10 et la fermeture de l'interrupteur mécanique 16 est comprise entre 100 µs et 1 ms.
- L'unité électronique de commande est programmée pour ouvrir le commutateur à semi-conducteurs 10 après une seconde période Δt2 à compter de l'instant où la partie mobile 164 en déplacement vers la position ouverte atteint une seconde position seuil, cette seconde position seuil étant définie de telle sorte que la seconde période Δt2 est inférieure à 1 ms, notamment comprise entre 10 µs et 100 µs.
- L'interrupteur mécanique 16 comprend une partie mobile 164 munie d'un disque de répulsion 164.3 et une bobine de répulsion 170 qui, lorsqu'elle est alimentée en courant, repousse le disque de répulsion 164.3, la partie mobile 164 se déplaçant alors de sa position fermée à sa position ouverte.
- L'interrupteur mécanique 16 a un temps d'ouverture inférieur à 1 ms, notamment de l'ordre de 200 µs.
- Le circuit comprend une quatrième branche 13 ayant un nœud commun avec la troisième branche 14 et un nœud commun avec les deux premières branches 4 et 8, cette quatrième branche 13 comprenant un autre interrupteur mécanique 12.
- En variante, le circuit C comprend une quatrième branche 13 reliant une borne de connexion électrique 2.1 ou 2.2 du dispositif 2 aux trois premières branches du circuit C, cette quatrième branche 13 comprenant un autre interrupteur mécanique 12.
- Cet autre interrupteur mécanique 12 est dimensionné pour assurer une isolation galvanique entre une première borne de connexion 2.1 et une seconde borne de connexion 2.2 du dispositif 2.

Les caractéristiques des modes de réalisation envisagés ci-dessus peuvent être combinées entre elles pour générer de nouveaux modes de réalisation de l'invention.

## Revendications

1. Dispositif de coupure de courant à semi-conducteurs (2), comprenant :
- un circuit (C) avec une première branche (4) comportant un organe absorbeur d'énergie (6), une deuxième branche (8) comportant un commutateur à semi-conducteurs (10), le commutateur à semi-conducteurs étant connecté en parallèle avec la première branche, et une troisième branche (14) comportant un interrupteur mécanique (16), la troisième branche étant connectée en parallèle avec la deuxième branche,
- un moyen (3) de mesure de l'intensité (I) du courant électrique à une borne de connexion (2.1, 2.2) du dispositif, et
- une unité électronique (18) de commande du commutateur (10), programmée pour commander l'ouverture du commutateur à semi-conducteurs lorsque l'intensité (I) du courant mesurée par le moyen de mesure atteint une valeur prédéterminée, le dispositif basculant alors d'un état passant à un état de coupure, dans lequel le courant est absorbé par l'organe absorbeur d'énergie, l'ouverture et la fermeture de l'interrupteur mécanique (16) étant commandées par l'unité électronique de commande (18), l'unité électronique de commande (18) étant programmée de telle sorte que le commutateur à semi-conducteurs est ouvert après l'interrupteur mécanique (16) lorsque le dispositif passe de l'état passant à l'état de coupure,
le dispositif étant **caractérisé en ce que** l'unité électronique de commande (18) est programmée de telle sorte que le commutateur à semi-conducteurs (10) est fermé avant l'interrupteur mécanique (16) lorsque le dispositif passe de l'état de coupure à l'état passant.

2. Dispositif selon la revendication 1, **caractérisé en ce que** l'interrupteur mécanique (16) comprend une partie fixe (162), une partie (164) mobile entre une position ouverte et une position fermée et un moyen (172) de mesure de la position (P16) de la partie mobile par rapport à la partie fixe, ce moyen de mesure étant connecté à l'unité électronique de commande (18) et **en ce que** l'unité électronique de commande (18) est programmée pour fermer le commutateur à semi-conducteurs (10) lorsque la partie mobile, en déplacement vers la position fermée, atteint une première position seuil (P16a).

3. Dispositif selon la revendication 2, **caractérisé en ce que** la première position seuil (P16a) est définie de telle sorte qu'une première période (Δt1) entre la fermeture du commutateur (10) et la fermeture de l'interrupteur mécanique (16) est comprise entre 100 µs et 1 ms.

4. Dispositif selon la revendication 2 ou 3, **caractérisé en ce que** l'unité électronique de commande (18) est programmée pour ouvrir le commutateur à semi-conducteurs (10) après une seconde période (Δt2) à compter de l'instant où la partie mobile en déplacement vers la position ouverte atteint une seconde position seuil (P16b), cette seconde position seuil étant définie de telle sorte que la seconde période (Δt2) est inférieure à 1 ms, notamment comprise entre 10 µs et 100 µs.

5. Dispositif selon l'une des revendications précédentes, **caractérisé en ce que** l'organe absorbeur d'énergie (6) est amovible.

6. Dispositif selon l'une des revendications précédentes, **caractérisé en ce que** l'interrupteur mécanique (16) comprend une partie mobile (164) munie d'un disque de répulsion (164.3) et une bobine de répulsion (170) qui, lorsqu'elle est alimentée en courant, repousse le disque de répulsion, la partie mobile se déplaçant alors de sa position fermée à sa position ouverte.

7. Dispositif selon l'une des revendications précédentes, **caractérisé en ce que** l'interrupteur mécanique (16) a un temps d'ouverture inférieur à 1 ms, notamment de l'ordre de 200 µs.

8. Dispositif selon l'une des revendications précédentes, **caractérisé en ce que** le circuit comprend une quatrième branche (13) ayant un nœud commun avec la troisième branche (14) et un nœud commun avec les deux premières branches (4, 8), cette quatrième branche (13) comprenant un autre interrupteur mécanique (12).

9. Dispositif selon l'une des revendications 1 à 7, **caractérisé en ce que** le circuit comprend une quatrième branche (13) reliant une borne de connexion électrique (2.1) du dispositif aux trois premières branches du circuit (C), cette quatrième branche (13) comprenant un autre interrupteur mécanique (12).

10. Dispositif selon la revendication 8 ou 9, **caractérisé en ce que** l'autre interrupteur mécanique (12) est dimensionné pour assurer une isolation galvanique entre une première borne de connexion (2.1) et une seconde borne de connexion (2.2) du dispositif.

11. Dispositif selon l'une des revendications précédentes, **caractérisé en ce que** le dispositif (2) comprend deux bornes de connexion électrique (2.1, 2.2) dont l'une d'entre elles est destinée à être connectée à une source de courant continu.

## Patentansprüche

1. Halbleiter-Stromunterbrechungsvorrichtung (2), die Folgendes umfasst:
- eine Schaltung (C) mit einem ersten Zweig (4), der ein Energieabsorptionsorgan (6) aufweist, einem zweiten Zweig (8), der einen Halbleiterschalter (10) aufweist, wobei der Halbleiterschalter zu dem ersten Zweig parallel geschaltet ist, und einem dritten Zweig (14), der einen mechanischen Unterbrecher (16) aufweist, wobei der dritte Zweig zu dem zweiten Zweig parallel geschaltet ist,
- ein Mittel (3) zum Messen der Stärke (I) des elektrischen Stroms an einem Verbindungsanschluss (2.1, 2.2) der Vorrichtung und
- eine elektronische Einheit (18) für die Steuerung des Schalters (10), die programmiert ist, das Öffnen des Halbleiterschalters zu steuern, wenn die Stärke (I) des Stroms, die durch das Messmittel gemessen wird, einen vorgegebenen Wert erreicht, wobei die Vorrichtung dann von einem Durchlasszustand in einen Unterbrechungszustand kippt, in dem der Strom von dem Energieabsorptionsorgan absorbiert wird, wobei das Öffnen und Schließen des mechanischen Unterbrechers (16) durch die elektronische Steuereinheit (18) gesteuert werden, wobei die elektronische Steuereinheit (18) in der Weise programmiert ist, dass der Halbleiterschalter nach dem mechanischen Unterbrecher (16) geöffnet wird, wenn die Vorrichtung von dem Durchlasszustand in den Unterbrechungszustand übergeht,
wobei die Vorrichtung **dadurch gekennzeichnet ist, dass** die elektronische Steuereinheit (18) in der Weise programmiert ist, dass der Halbleiterschalter (10) vor dem mechanischen Unterbrecher (16) geschlossen wird, wenn die Vorrichtung von dem Unterbrechungszustand in den Durchlasszustand übergeht.

2. Vorrichtung nach Anspruch 1, **dadurch gekennzeichnet, dass** der mechanische Unterbrecher (16) einen festen Teil (162), einen zwischen einer geöffneten Position und einer geschlossenen Position beweglichen Teil (164) und ein Mittel (172) zum Messen der Position (P16) des beweglichen Teils in Bezug auf den festen Teil umfasst, wobei dieses Messmittel mit der elektronischen Steuereinheit (18) verbunden ist, und dass die elektronische Steuereinheit (18) programmiert ist, den Halbleiterschalter (10) zu schließen, wenn der bewegliche Teil, der sich in die geschlossene Position verlagert, eine erste Schwellenposition (P16a) erreicht.

3. Vorrichtung nach Anspruch 2, **dadurch gekennzeichnet, dass** die erste Schwellenposition (P16a) so definiert ist, dass eine erste Zeitdauer (Δt1) zwischen dem Schließen des Schalters (10) und dem Schließen des mechanischen Unterbrechers (16) zwischen 100 µs und 1 ms liegt.

4. Vorrichtung nach Anspruch 2 oder 3, **dadurch gekennzeichnet, dass** die elektronische Steuereinheit (18) programmiert ist, den Halbleiterschalter (10) nach einer zweiten Zeitdauer (Δt2), die ab dem Zeitpunkt gezählt wird, zu dem der bewegliche Teil, der sich in die offene Position verlagert, eine zweite Schwellenposition (P16b) erreicht, zu öffnen, wobei diese zweite Schwellenposition so definiert ist, dass die zweite Zeitdauer (Δt2) kleiner als 1 ms ist und insbesondere zwischen 10 µs und 100 µs liegt.

5. Vorrichtung nach einem der vorhergehenden Ansprüche, **dadurch gekennzeichnet, dass** das Energieabsorptionsorgan (6) abnehmbar ist.

6. Vorrichtung nach einem der vorhergehenden Ansprüche, **dadurch gekennzeichnet, dass** der mechanische Unterbrecher (16) einen beweglichen Teil (164) umfasst, der mit einer Rückstoßscheibe (164.3) und mit einer Rückstoßspule (170) versehen ist, die dann, wenn sie mit Strom versorgt wird, die Rückstoßscheibe wegschiebt, wobei sich der bewegliche Teil dann von seiner geschlossenen Position in seine geöffnete Position verlagert.

7. Vorrichtung nach einem der vorhergehenden Ansprüche, **dadurch gekennzeichnet, dass** der mechanische Unterbrecher (16) eine Öffnungszeit hat, die kleiner als 1 ms ist und insbesondere in der Größenordnung von 200 µs liegt.

8. Vorrichtung nach einem der vorhergehenden Ansprüche, **dadurch gekennzeichnet, dass** die Schaltung einen vierten Zweig (13) enthält, der einen gemeinsamen Knoten mit dem dritten Zweig (14) und einen gemeinsamen Knoten mit den beiden ersten Zweigen (4, 8) besitzt, wobei dieser vierte Zweig (13) einen weiteren mechanischen Unterbrecher (12) enthält.

9. Vorrichtung nach einem der Ansprüche 1 bis 7, **dadurch gekennzeichnet, dass** die Schaltung einen vierten Zweig (13) enthält, der einen elektrischen Verbindungsanschluss (2.1) der Vorrichtung mit den drei ersten Zweigen der Schaltung (C) verbindet, wobei dieser vierte Zweig (13) einen weiteren mechanischen Unterbrecher (12) enthält.

10. Vorrichtung nach Anspruch 8 oder 9, **dadurch gekennzeichnet, dass** der weitere mechanische Unterbrecher (12) so bemessen ist, dass eine galvanische Isolation zwischen einem ersten Verbindungsanschluss (2.1) und einem zweiten Verbindungsanschluss (2.2) der Vorrichtung sichergestellt ist.

11. Vorrichtung nach einem der vorhergehenden Ansprüche, **dadurch gekennzeichnet, dass** die Vorrichtung (2) zwei elektrische Verbindungsanschlüsse (2.1, 2.2) enthält, wovon einer dazu bestimmt ist, mit einer Gleichstromquelle verbunden zu werden.

## Claims

1. A semiconductor current cutoff device (2), comprising:
- a circuit (C) with a first branch (4) having an energy absorbing member (6), a second branch (8) having a semiconductor switch (10), the semiconductor switch being connected in parallel with the first branch, and a third branch (14) having a mechanical switch (16), the third branch being connected in parallel with the second branch,
- a means (3) for measuring the intensity (I) of the electrical current at a connection terminal (2.1, 2.2) of the device, and
- an electronic control unit (18) of the switch (10), programmed to control the opening of the semiconductor switch when the intensity (I) of the current measured by the measuring means reaches a predetermined value, the device then switching from a conductive state to a cut-off state, in which the current is absorbed by the energy absorbing member, the opening and closing of the mechanical switch (16) being controlled by the electronic control unit (18), the electronic control unit (18) being programmed such that the semiconductor switch is opened after the mechanical switch (16) when the device switches from the conductive state to the cut-off state,
the device being **characterized in that** the electronic control unit (18) is programmed such that the semiconductor switch (10) is closed before the mechanical switch (16) when the device switches from the cut-off state to the conductive state.

2. The device according to claim 1, **characterized in that** the mechanical switch (16) comprises a fixed part (162), a part (164) moving between an open position and a closed position and a means (172) for measuring the position (P16) of the moving part relative to the fixed part, said measuring means being connected to the electronic control unit (18) and **in that** the electronic control unit (18) is programmed to close the semiconductor switch (10) when the moving part, moving toward the closed position, reaches a first threshold position (P16a).

3. The device according to claim 2, **characterized in that** the first threshold position (P16a) is defined such that a first period (Δt1) between the closing of the switch (10) and the closing of the mechanical switch (16) is between 100 µs and 1 ms.

4. The device according to claim 2 or 3, **characterized in that** the electronic control unit (18) is programmed to open the semiconductor switch (10) after a second period (Δt2) from the moment where the moving part moving toward the open position reaches a second threshold position (P16b), said second threshold position being defined such that the second period (Δt2) is less than 1 ms, in particular between 10 µs and 100 µs.

5. The device according to one of the preceding claims, **characterized in that** the energy absorbing member (6) is removable.

6. The device according to one of the preceding claims, **characterized in that** the mechanical switch (16) comprises a moving part (164) provided with a repulsion disc (164.3) and a repulsion coil (170), which, when supplied with current, repels the repulsion disc, the moving part then moving from its closed position to its open position.

7. The device according to one of the preceding claims, **characterized in that** the mechanical switch (16) has an opening time shorter than 1 ms, in particular around 200 µs.

8. The device according to one of the preceding claims, **characterized in that** the circuit comprises a fourth branch (13) having a node shared with the third branch (14) and a node shared with the first two branches (4, 8), this fourth branch (13) comprising another mechanical switch (12).

9. The device according to one of claims 1 to 7, **characterized in that** the circuit comprises a fourth branch (13) connecting an electrical connection terminal (2.1) of the device to the first three branches of the circuit (C), this fourth branch (13) comprising another mechanical switch (12).

10. The device according to claim 8 or 9, **characterized in that** the other mechanical switch (12) is dimensioned to provide galvanic insulation between a first connection terminal (2.1) and a second connection terminal (2.2) of the device.

11. The device according to one of the preceding claims, **characterized in that** the device (2) comprises two electrical connection terminals (2.1, 2.2), one of which is intended to be connected to a DC current source.
